# EUROPEAN PATENT SPECIFICATION

(11) **EP 1 455 501 B1**
(45) Date of publication and mention of the grant of the patent: **09.05.2007**
(21) Application number: 04005298.7
(22) Date of filing: 05.03.2004
(51) Int. Cl.: H04L 29/06

(54) **Method and apparatus for controlling transfer of content**
Verfahren und Vorrichtung zur Steuerung von Inhaltsübertragung
Procédé et dispositif pour commander du transfert de contenu

(30) Priority: 06.03.2003 JP 2003060524
(43) Date of publication of application: 08.09.2004
(73) Proprietor: NTT DoCoMo, Inc., Tokyo 100-6150 (JP)
(72) Inventor: Tajima, Koji, Tokyo 100-6150 (JP); Matsumoto, Naoki, Tokyo 100-6150 (JP); Ban, Hiroaki, Tokyo 100-6150 (JP); Yamada, Kazuhiro, Tokyo 100-6150 (JP)
(74) Representative: HOFFMANN EITLE

(56) References cited:
- EP-A- 1 128 598
- WO-A-98/44404
- US-A1- 2002 069 263
- US-A1- 2002 174 360
- US-B1- 6 173 406

## Description

### Technical Field

The present invention relates to a mobile communication terminal and an electronic device for controlling transfer of digital content from the electronic device to other devices.

### Background of the Invention

In US 6,173,405 B1, there are described authentication methods, systems, and computer program products that ensure that user media streaming requests originating from web documents have an authorized unifier resource locator URL. The user makes a streaming request to a media server with a URL including a URL prefix, a path, and the name of a media work to be performed. The media server compares this URL with earlier made URL entries in a pre-established database. If there is a URL correspondence between a URL in the pre-established database and the URL extracted from the HTML document received by the browser from a web server, then streaming of the particular work is authorized.

In EP 1 128 598 Al, there is described a contents management system, device, method, and program storage medium. Here, an information receiving apparatus receives identification information and encrypted identification information. The information receiving apparatus makes a comparison between them to allow prevention of illegal utilization of contents data.

In US 2002/0174360 Al, there is described a service providing system. To expand the after-sales services offered for a product purchased by a user, a service server that provides services accesses a specified navigation system, which is the product purchased by the user, using a device ID that is uniquely assigned to the navigation system. Then, the service server transmits service information to the specified navigation system. In other words, the service server actively accesses a navigation system, which is fundamentally one of countless terminal apparatuses on a communication network, and provides service information to that navigation system. By operating in this way, a great variety of services can be provided whenever appropriate.

Also, recently, there are provided mobile phones capable of downloading a digital content via a communication network from a content server, and executing the content. Such a digital content may include picture data, music data, and application programs. Hereinafter, such digital content is referred to simply as "a content". For example, such a mobile phone may download an application program such as a game application and execute the program, or it may download and display an image.

Attempts have been made to add a function of handling a content to devices other than mobile phones, for example, home electronic appliances such as audio devices, or car navigation systems and so on. However, such electronic devices do not have a function of performing communication with a content server via a communication network, and thus cannot download a content.

To overcome the above problem, Japanese Patent Application No. JP2002-196940A discloses a system for transmitting to an electronic device such as a digital camera a control program for upgrading the device. However, in the above system, the following problems may arise since the content transfer destination cannot be controlled.

First, it is not possible to selectively transmit to a particular device only a content designed for the device. Although there are different types of contents and different types of electronic devices, each electronic device is capable of handling only a particular type of content. Namely, it is meaningless to transmit to an electronic device a content that cannot be executed thereon.

Second, no measure is provided for copyright protection. A content provider often wishes to deliver a content only to an authorized device. However, it is not possible to restrict a destination of a content. Accordingly, illegal copying of a content cannot be prevented.

### Disclosure of the Invention

The present invention has been made to overcome the above problems. An object of the present invention is to provide a method and apparatus for controlling transfer of a content to an appropriate electronic device.
According to the present invention, this object is achieved by a mobile communication terminal having the features of claim 1.

Further, the object is achieved by an electronic device having the features of claim 7.

### Brief Description of the Drawings

Fig. 1 shows an example of a configuration of a communication system of the first embodiment, in which a communication terminal 20 and car navigation device 10 are included.
Fig. 2 shows an example of a configuration of communication terminal 20.
Fig. 3 shows an example of data format of device table stored in communication terminal 20.
Fig. 4 shows a Java runtime environment installed in communication terminal 20.
Fig. 5 shows a processing flow of transmission of a Java program performed by JavaAPP1.
Fig. 6 also shows a processing flow of transmission of a Java program performed by JavaAPP1.
Fig. 7 shows an example of a configuration of car navigation device 10.
Fig. 8 shows a Java runtime environment installed in car navigation device 10.
Fig. 9 shows a processing flow of storing a Java program in car navigation device 10 performed by JAM.
Fig. 10 shows a processing flow of storing a content in car navigation device 10 performed by JavaAPP2.
Fig. 11 shows an example of a configuration of a communication system of the second embodiment.
Fig. 12 shows an example of a configuration of car navigation device 10A.
Fig. 13 shows an example of operation in the communication system of the second embodiment.
Fig. 14 shows an example of a configuration of a communication system of the third embodiment.
Fig. 15 shows an example of a configuration of a management server 70.
Fig. 16 shows an example of operation in the communication system of the third embodiment.

### Detailed Description

### <First embodiment>

### <A. Configuration>

### (1. communication system)

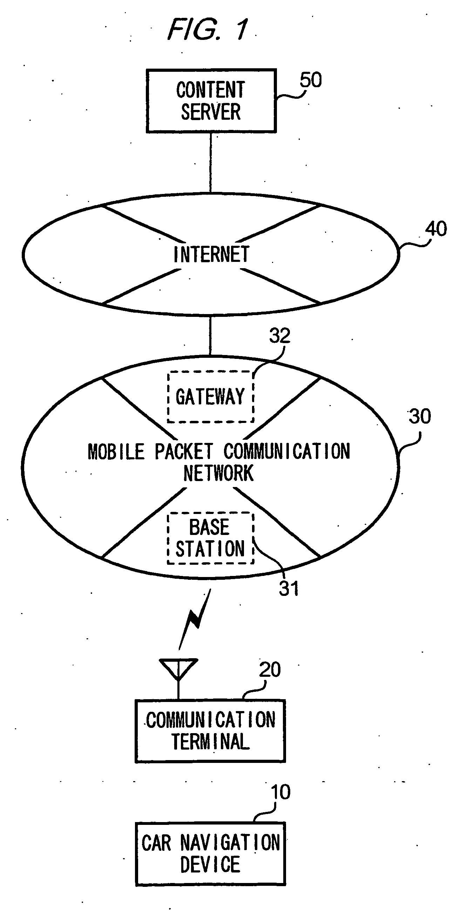

Fig. 1 shows an example of an overall configuration of a communication system of this embodiment. A content server 50 has a hardware configuration similar to that of a standard computer and is connected to Internet 40. Content server 50 stores a content and two types of program, described below, for transmission to a communication terminal 20 via Internet 40. The two types of program are object-oriented programs described in Java^{™}. Specifically, the programs are comprised of Java byte-codes, which can be interpreted and executed in a Java runtime environment, described later.

One type of program (hereinafter referred to as "JavaAPP 1") performs transmission of (i) itself (JavaAPP1), (ii) a content which is transmitted to electronic device 20 together with the program, and (iii) the other type of program (hereinafter referred to as "JavaAPP2") described below, to other devices. An owner of the programs JavaAPP1 and JavaAPP2 should be a content provider of the content and the programs should be protected by copyright.

The content provider restricts in advance a type of electronic device to which the content and JavaAPP2 are to be delivered. The content, JavaAPP1, and JavaAPP2 include data for specifying a copyright holder (namely, a content provider). Hereinafter, the data is referred to as "content provider ID". In the following description, the content provider ID is a URL (Universal Resource Locator) of content server 50, as an example. It is possible that the content provider ID may be a name of the content provider or the like.

Mobile packet communication network 30 provides a packet communication service with communication terminal 20. Mobile packet communication network 30 includes base stations 31 and a gateway (GW) 32. Each of base stations 32 performs a wireless communication with communication terminal 20 within a respective radio cell. GW 32 performs protocol conversion between protocols utilized in mobile packet communication network 30 and Internet 40.

Communication terminal 20 is a mobile phone capable of performing short-range wireless communication and establishing a Java runtime environment. Communication terminal 20 performs a packet communication to download and store in communication terminal 20 a content, JavaAPP1, and JavaAPP2 from content server 50 via mobile communication network 30 and Internet 40. In addition, communication terminal 20 performs short-range wireless communication with car navigation device 10 via IrDA (Infrared Data Association) or Bluetooth^{™}, for example. Further, communication terminal 20 is capable of executing JavaAPP1 stored in communication terminal 20 in the Java runtime environment.

Car navigation device 10 is capable of performing short-range wireless communication and establishing a Java runtime environment, in addition to a standard navigation function using a GPS (Global positioning system) or the like. Car navigation device 10 is able to receive from a communication terminal 20 a content and JavaAPP2, store the content and JavaAPP2, and execute JavaAPP2 with the Java runtime environment.

It is possible that short-range communication between communication terminal 20 and car navigation device 10 is performed with a cable via USB (Universal Serial Bus) standard or the like. In the following description, this communication will be referred to simply as short-range communication. Further, communication terminal 20 may be a PDA (Personal Digital Assistant), laptop computer or the like, which are capable of performing packet communication with content server 50 via Internet 40, a Java runtime environment, and the short-range communication. Still further, it is possible that car navigation device 10 is an audio device or home electronic appliances, that is capable of performing short-range communication with communication terminal 20 in a Java runtime environment. Still further, it is possible programs executed in communication terminal 20 and car navigation device 10 are written in a computer language other than Java.

### (2. Communication terminal 20)

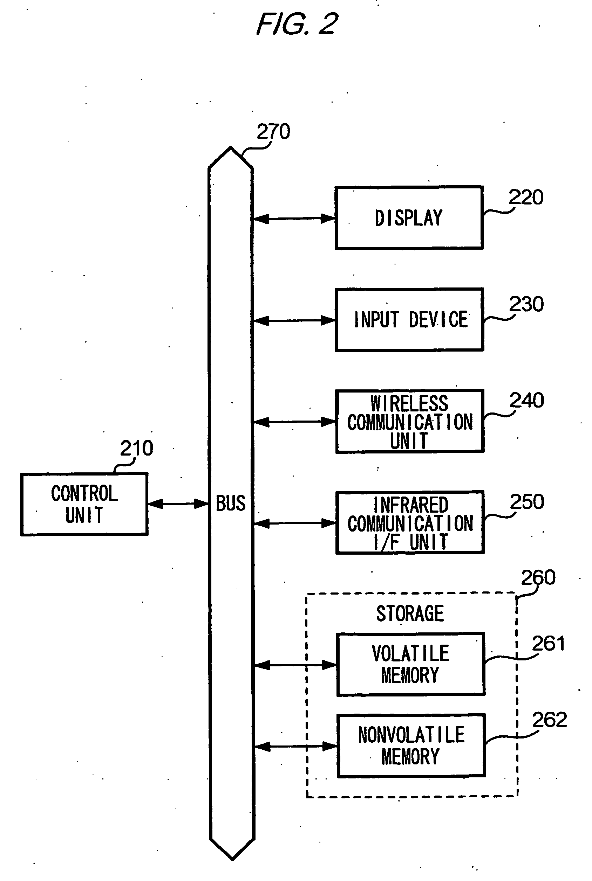

As shown in Fig. 2, communication terminal 20 includes a control unit 210, display 220, input device 230, wireless communication unit 240, infrared communication interface (hereinafter referred simply to as "IR- IF unit") 250, storage 260, and a bus 270 for connecting the units.

Control unit 210 includes, for example, a CPU (Central Processing Unit), which executes software stored in storage 260 to control every unit of communication terminal 20. Display 220 includes a liquid crystal display panel and a drive circuit, which displays an image according to data supplied from control unit 210. Input device 230 includes a keypad and the like, for a user to operate communication terminal 20. Input device 230 outputs a signal according to a user's operation to control unit 210.

Wireless communication unit 240 includes an antenna (not shown) for performing wireless communication with a base station 31 which covers an area including a current position of communication terminal 20. Specifically, wireless communication unit 240 receives data from base station 31 and supplies the data to control unit 210. On the other hand, upon receipt of data from control unit 210, wireless communication unit 240 transmits the data to the base station 31.

IR-IF unit 250, which is capable of performing communication via IrDA standard, transmits/receives, under control of control unit 210, data with other electronic devices (car navigation device 10, in this embodiment) using infrared light. Specifically, IR-IF unit 250 includes a light-emitting device, light-detecting device, and modulation/demodulation circuit.

Storage 260 includes a volatile memory 261 and nonvolatile memory 262. Volatile memory 261 is, for example, a RAM (Random Access Memory) and is used by control unit 210 as a work area. Nonvolatile memory 262 is, for example, an EEPROM (Electrically Erasable Programmable Read Only Memory), within which a JAR storage and scratch pad are provided. The JAR storage and the scratch pad are memory areas within nonvolatile memory 262, each of which has a characteristic property.

Prior to explanation of the JAR storage, a Java program downloaded to communication terminal 20 is first described. A Java program is comprised of a JAR (Java Archive) file and ADF (Application Descriptor File). JAR file is a bundle of files including a main program written in Java byte-code together with other data files (often called 'resource') used with the main program, such as an image data file or audio data file.

ADF includes control information for installment and execution of JAR file, and a content provider ID described above. In JAR storage, there are memory areas assigned for each Java program. JAR file is stored in a memory area.

The scratch pad is a memory area provided within nonvolatile memory 262 and it is divided into a plurality of blocks. Each of the blocks is assigned to a Java program stored in JAR storage for storing data which is created and processed during execution of the Java program. ADF of the program is also stored in the block.

As described above, a content, JavaAPP1, and JavaAPP2 are downloaded from content server 50 to communication terminal 20. Among other files, JAR file of JavaAPP1 is stored in JAR storage and ADF of JavaAPP1, content, and ADF and JAR file of JavaAPP2 are stored in the scratch pad. In other words, JAR file of JavaAPP2 is stored in association with JavaAPP1. The reason for storing in this way is described below.

Writing and reading a Java program to and from JAR storage is controlled by JAM (Java Application Manager), described later. It is to be noted that JAM prohibits transmission of a Java program to an outside device via wireless communication unit 240 or IR-IF unit 250. Thus, if JavaAPP2 were stored in JAR storage, JavaAPP2 could not be provided to car navigation device 10. This is the reason for storing JAR file of JavaAPP2 in association with JavaAPP1 in the manner described above.

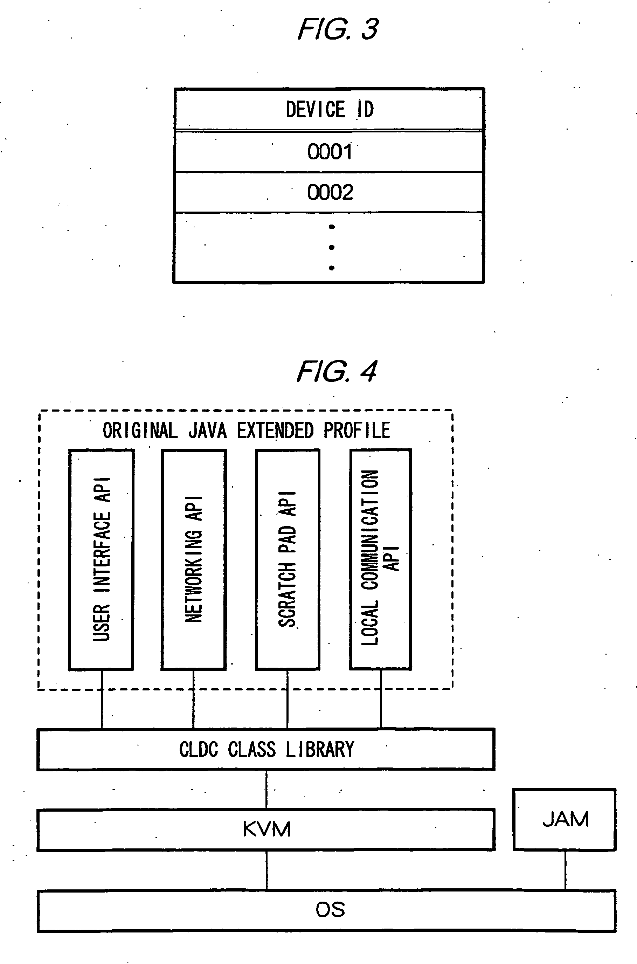

ADF of JavaAPP1 stored in the scratch pad includes a device table showing authenticated electronic devices shown in Fig. 3, in addition to the control information and the provider ID described above. Referring to Fig. 3, the device table stores identifiers for identifying electronic devices that are permitted by a content provider to download a content provided by the provider. The identifier (hereinafter referred to as a "device ID") is, for example, a product number of the device (car navigation device 10, in this embodiment).

Control unit 210 determines, referring to the device table, whether an electronic device is permitted to download a content provided by content provider 50, on the basis of a device ID received from the electronic device via IR-IF unit 250. Nonvolatile memory 262 stores OS (Operating system) software and a program for executing a Java runtime environment, which are executed by control unit 210.

Referring to Fig. 4, the software for executing the Java runtime environment installed in communication terminal 20 will now be described. As shown in Fig. 4, software which enables control unit 210 to execute the Java runtime environment, is compatible with J2ME (Java2 platform Micro Edition). It is noted that J2ME is one of Java platforms designed for electronic home appliances. The software installed in the communication terminal includes KVM, CLDC (Connected Limited Device Configuration) class library, original Java extended profile, and JAM (Java Application Manager).

In this embodiment communication terminal 20 has a Java platform compatible with J2ME. It is also possible that a Java platform compatible with J2SE (Java2 Standard Edition) or J2EE (Java2 Enterprise Edition) may be employed. It is to be noted that J2SE and J2EE are Java platforms designed for a personal computer and a server such as content server 50, respectively.

KVM is a kind of JVM, which is designed for a hand held device such as a mobile phone or PDA. JVM translates a Java byte-code into a machine language which control unit 210 can interpret and execute. CLDC class library performs a general function of a handheld device such as a mobile phone or PDA.

The original Java Extended Profile adds a function particular to a mobile phone operating under CLDC class library. The original Java extended profile includes APIs (Application Program Interface), such as a user interface API, networking API, scratch pad API, and local communication API. Control unit 210 calls these APIs by interpreting Java byte-codes included in JavaAPP1 to activate various functions. It is to be noted that an API is synonymous with a class (program) in this description.

The user interface API provides a user interface to communication terminal 20. The networking API performs a function of accessing a network resource identified by a URL (Uniform Resource Locator). The scratch pad API performs a function of reading/writing data from or to the scratch pad. The local communication API performs communication to outside device via IrDA using IR-IF unit 250.

JAM is software that manages, under control of the OS, the Java application programs stored in communication terminal 20. Specifically, control unit 210 executes JAM to perform functions of: installing/deleting the Java application programs, displaying a list of names of the Java application programs stored in nonvolatile memory 262, and managing execution of the Java application programs.

Specifically, the function of managing execution of the Java application program includes starting and terminating the programs. For example, when a user inputs an instruction to execute JavaAPP1, control unit 210 dedicates, under control of JAM, a work area in volatile memory 261 for executing JavaAPP1. Next, control unit 210 transfers byte-codes included in JavaAPP1 to the work area, to interpret and execute under control of KVM. When the user inputs an instruction of termination of JavaAPP1, control unit 210 stops interpreting and executing the byte-codes and releases the work area to terminate JavaAPP1.

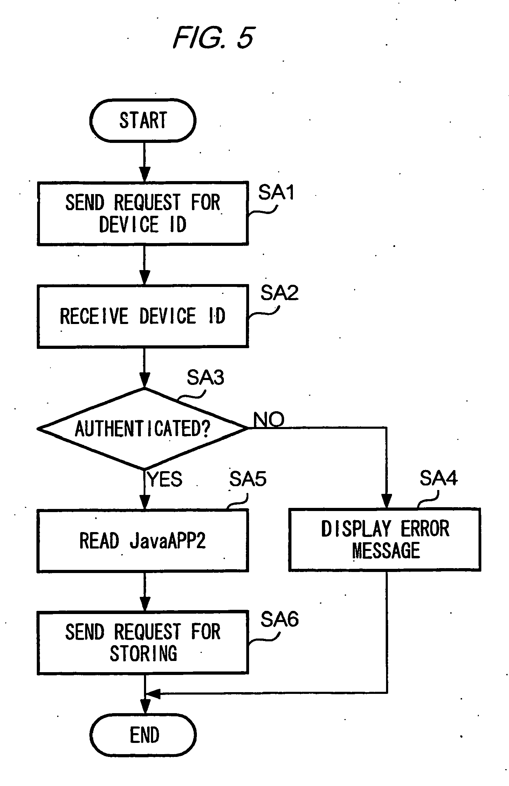

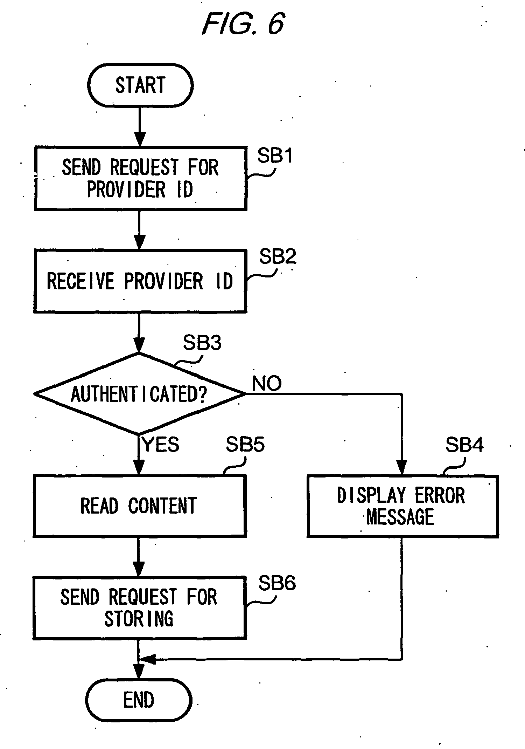

In the Java execution environment shown in Fig. 4, control unit 210 of communication terminal 20 executes JavaAPP1 stored in nonvolatile memory 262 to perform the following three functions. The first function is to transmit JavaAPP2 stored in the scratch pad to car navigation device 10 as shown in Fig. 5. The second function is to transmit the content stored in the scratch pad to car navigation device 10 as shown in Fig. 6.

### (3. Car navigation device 10)

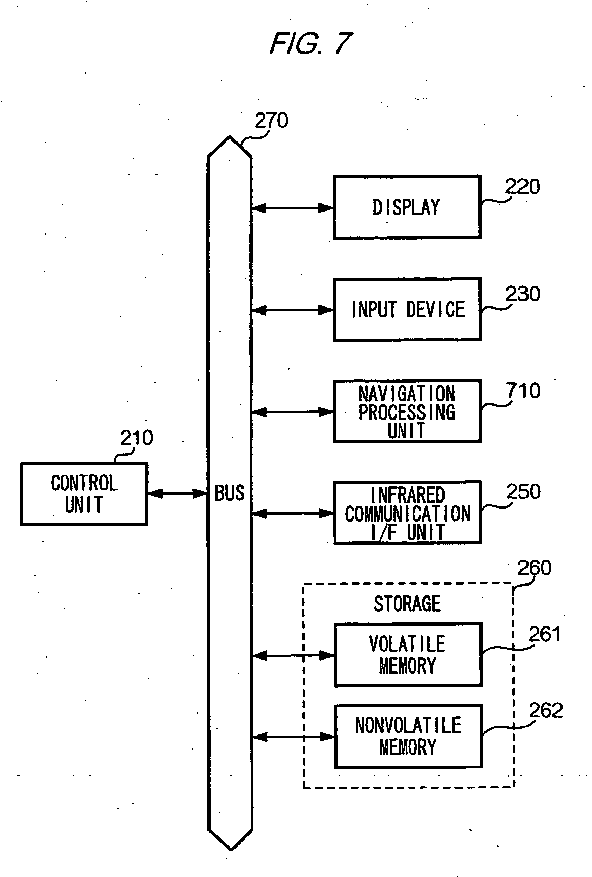

Referring to Fig. 7, car navigation device 10 differs from communication terminal 20 shown in Fig. 5 only in that (i) wireless communication unit 240 is omitted and (ii) navigation processing unit 710 is provided.

Navigation processing unit 710 has a general function of GPS (Global Positioning System), which receives an electronic wave from a satellite to determine a current position of a vehicle to which car navigation device 10 is provided. Also, navigation processing unit 750 displays a map of nearby areas and an icon of the vehicle together with the map on display 520 to notify the user of the current position and possible routes to a destination input by the user.

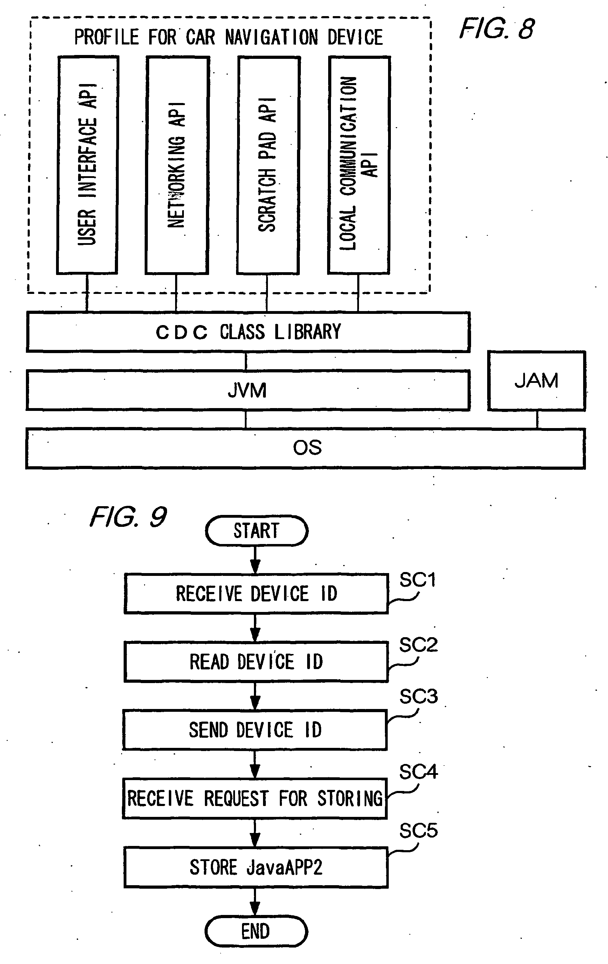

Nonvolatile memory 262 of car navigation device 10 stores the same information as communication terminal 20, except for the three features described below. The first is that a device ID of car navigation device 10 (for example,"0001") is stored. The second is that none of a content, JavaAPP1, or JavaAPP2 are stored. The third is that software for establishing a Java runtime environment shown in Fig. 8 is stored, instead of software for executing a Java runtime environment shown in Fig. 4. The software for executing the environment shown in Fig. 8 will now be described in detail.

The Java runtime environment shown in Fig. 8 differs from that shown in Fig. 3 in that (i) JVM is provided instead of KVM and (ii) a CDC (Connected Device Configuration) class library is provided instead of CLDC class library, and (iii) a profile for a car navigation device is provided instead of the original extended profile.

CDC class library is designed for performing a general function for a middle or large sized electronic device such as a car navigation device or audio device. The profile of a car navigation device performs a function specific to the car navigation device in addition to the functions provided by CLDC class library. As shown in Figs. 4 and 8, the profile for car navigation device contains the same four APIs as in the original extended profile of the communication terminal.

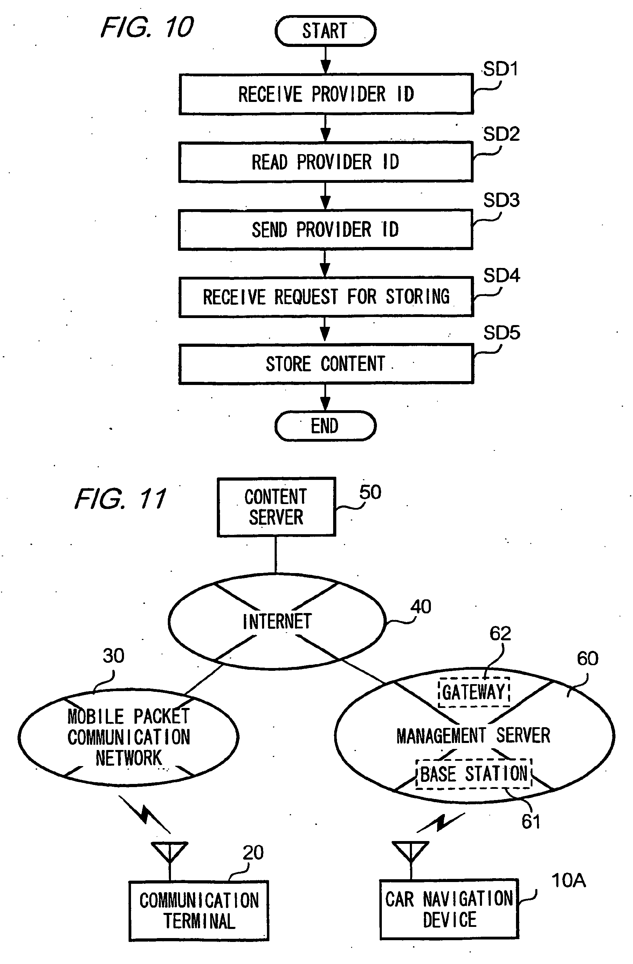

Under control of JAM shown in Fig. 8, control unit 210 performs the following three functions, in addition to the functions performed under control of JAM as shown in Fig. 4. The first is transmitting a device ID stored in nonvolatile memory 262 as shown in Fig. 9. The second is receiving JavaAPP2 from communication terminal 20 and storing JavaAPP2 in JAR storage of nonvolatile memory 262. The third is storing a content transmitted by communication terminal 20 in the scratch pad as shown in Fig. 10.

### <B. Operation>

Characteristic operations carried out by car navigation device 10 and communication terminal 20 shown in Fig. 1 will now be described referring to the drawings. In the following description, JavaAPP1 should be executed in communication terminal 20 and JAM should be executed in car navigation device 10. Further, car navigation device 10 should be permitted, by a content provider, to receive a content provided by content server 50. Namely, the device ID "0001" stored in car navigation device 10 should be registered in the device table shown in Fig. 3. Still further, a user of communication terminal 20 should finish inputting an instruction of transmitting JavaAPP2 to car navigation device 10.

### <Example 1- transfer of JavaAPP2>

Control unit 210 of communication terminal 20 running JavaAPP1 performs transmission processing shown in Fig. 5. As shown in the figure, control unit 210 first transmits to a car navigation device 10 a request message for a device ID via IR-IF unit 250 (step SA1).

On the other hand, control unit 210 of car navigation device 10 running JAM performs storing processing shown in Fig. 9. As shown in Fig. 9, upon receipt of the request message via IR-IF unit 250 (step SC1), control unit 210 reads a device ID from nonvolatile memory 262 (step SC2). Next, control unit 210 creates a response message in which the read device ID is included, to transmit to communication terminal 20 via IR-IF unit 250 (step SC3).

Referring back to Fig. 5, control unit 210 of communication terminal 20 receives the response message via IR-IF unit 250 (step SA2). Next, control unit 210 determines whether the device ID included in the response message is registered in the device table shown in Fig. 3 (step SA3).

If the device ID is not registered (step SA3, NO), control unit 210 displays an error message on display 220 notifying that the electronic device specified by the user is not permitted to receive the content (step SA4), and then quits the transmission processing. If the device ID is registered (step SA3, YES), control unit 210 reads JavaAPP2 from a block assigned for JavaAPP1 provided in the scratch pad (step SA5).

Next, control unit 210 creates a request message, in which the read JavaAPP2 and an instruction code for car navigation device to store JavaAPP2, transmits the request message to car navigation device 10 via IR-IF unit 250 (step SA6), and then ends the transmission processing. It is to be noted that in this embodiment the device ID of car navigation device 10 is registered in the device table, thus "YES" is determined in step SA3.

Referring back to Fig. 9, upon receipt of the request message (step SC4), control unit 210 of car navigation device 10 extracts the instruction code from the request message and thus stores a program included in the message (namely, JavaAPP2) in nonvolatile memory 262 (step SC5), and then ends the storing processing. Specifically, control unit 210 stores JAR file of JavaAPP2 in the JAR storage. Next, control unit 210 assigns a block for JavaAPP2 in the scratch pad and stores ADF of JavaAPP2 in the block. Following completion of storing of JavaAPP2, control unit 210 of car navigation device 10 executes JavaAPP2 stored in nonvolatile memory 262 to perform processing of storing a content as shown in Fig. 10.

In the above description, control unit 210 of car navigation device 10 executes JavaAPP2 immediately after completion of storing JavaAPP2. It is possible that after completion of the storing, control unit 210 does not execute JavaAPP2 until an instruction by a user of car navigation device 10 is inputted.

### <Example 2- transfer of content>

An operation of transferring a content from communication terminal 20 to car navigation device 10 will now be described.

In the following description, transfer of a Java program from communication terminal 20 to car navigation device 10 should be completed. Accordingly, car navigation device 10 should store JavaAPP2 originated from a content provider that provides also JavaAPP1. Also, JavaAPP1 should run in communication terminal 20 and JavaAPP2 should run in car navigation device 10.

In communication terminal 20, when control unit 210 receives a user's instruction to transfer a content, which content is stored in the scratch pad in association with JavaAPP1, to car navigation device 10, control unit 210 performs processing of transmitting the content shown in Fig. 6. As shown, control unit 210 first transmits to car navigation device 10 via IR-IF unit 250 a request message for a content provider ID of a Java program which is running in car navigation device 10 (step SB1).

On the other hand, JavaAPP2 is running in car navigation device 210 and thus control unit 210 is performing processing of storing a content as shown in Fig. 10. Referring to Fig. 10, upon receipt of the request message (step SD1), control unit 210 reads a content provider ID of JavaAPP2 from ADF stored in nonvolatile memory 262 (step SD2). Next, control unit 210 creates a response message in which the read content provider ID is included and transmits the response message to communication terminal 20 via IR-IF unit 250 (step SD3).

Referring back to Fig. 6, control unit 210 of communication terminal 20 receives the response message via IR-IF unit 250 (step SB2). Next, control unit 210 compares the device ID included in the response message with the device ID stored in ADF of JavaAPP1 (step SB3). Since, in this embodiment, JavaAPP1 and JavaAPP2 are originated from content server 50, both of the device IDs are same. Accordingly, "YES" is determined in step SB3.

If the IDs are different (step SB3, NO), control unit 210 displays on display 220 of communication terminal 20 to notify to the user that a Java program running in the electronic device specified by the user (namely, car navigation device 10) is not capable of interpreting the content (step SB4), and then ends the transmission processing. If the IDs are the same (step SB3, YES), control unit 210 reads the content from a block in the scratch pad, which block is associated with JavaAPP1 (step SB5). Next, control unit 210 creates a message containing the read content and an instruction code for car navigation device 10 to store the content, transmits the message to car navigation device 10 via IR-IF unit 250 (step SB6), and then ends the transmission processing.

Referring back to Fig. 10, upon receipt of the message (step SD4), control unit of car navigation device 210 stores, according to the instruction code included in the message, the content in nonvolatile memory 262 (step SD5), and then ends the storing processing. Specifically, the content is stored in a block of the scratch pad, the block associated with JavaAPP2.

From the foregoing, in this embodiment transfer of a content is controlled on the basis of a content provider ID, thus a content provider is able to restrict an electronic device that can receive the content via communication terminal 20.

### <Second embodiment>

In the first embodiment a content provider ID is transmitted together with an execution environment of the content (namely, JavaAPP2) from communication terminal 20 to car navigation device 10. In the second embodiment, another way of obtaining a content provider ID by the car navigation device 10 is provided.

Fig. 11 shows an overall configuration of a communication system of the second embodiment. In this embodiment a car navigation device 10A is provided instead of car navigation device 10, to receive a content from content server 50 via mobile packet communication network 30, without using communication terminal 20. In the following description, the configuration of JavaAPP2 should be same as that of the first embodiment and the content provider ID should be a character string.

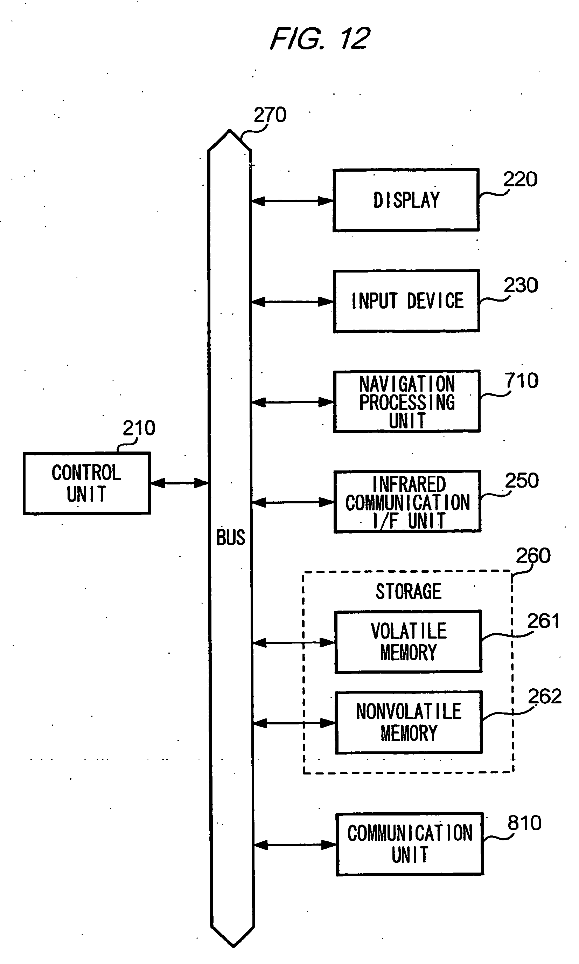

Fig. 12 shows a configuration of car navigation device 10A. As shown, an additional communication unit 810 is provided. Communication unit 810 includes a communication interface for performing wireless communication with base station 61 accommodated to mobile packet communication network 60. A web browser program is stored in storage 260 and thus control unit 210 executes the browser according to a user's instruction or the like, to access a computer connected to the Internet 40.

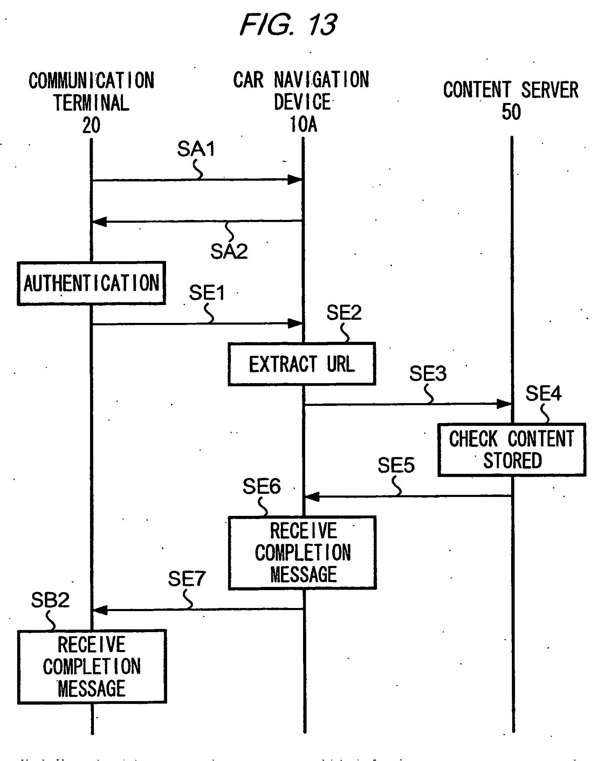

Fig. 13 shows an example of receiving JavaAPP2 by car navigation device 10A using communication terminal 20 and content server 50. Similarly to the first embodiment as shown in Fig. 5, a request message for a device ID is first transmitted from communication 20 to car navigation device 10A (step SA1). In response, car navigation device 10A transmits the device ID to communication terminal 20. Communication terminal 20 authenticates car navigation device 10A using the device ID (step SA3). After success of the authentication, communication terminal 20 creates a message, in which a URL representing a storage location of JavaAPP2 within content server 50 is included, and transmits the message to car navigation device 10A (step SE1).

Next, car navigation device 10A extracts the URL from the message (step SE2), and accesses content server 50 using the URL (step SE3). Content server 50 reads JavaAPP2 and determines whether JavaAPP2 is stored in storage unit 260 (step SE4). Only if JavaAPP2 is not stored in storage unit 260, content server transmits JavaAPP2 to car navigation device 10A (step SE5). Upon receipt of JavaAPP2 (step SE6), car navigation device 10A transmits a completion message to communication terminal 20 (step SE7). Operations of transmission of a content are the same as those of the first embodiment, thus explanation is omitted.

### <Third embodiment>

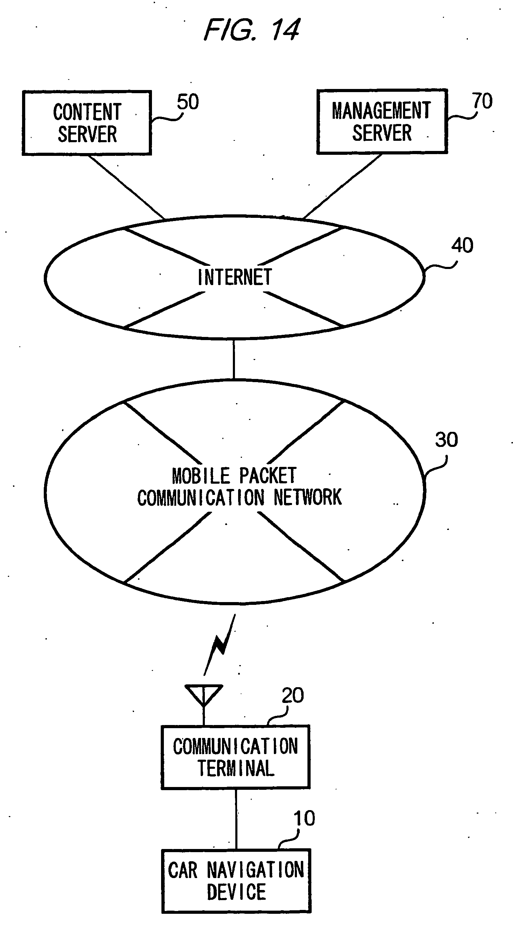

Fig. 14 shows a communication system of the third embodiment. As shown, in this embodiment a management server 70 is provided for receiving an inquiry about authenticity of car navigation device 10 before communication terminal 20 transmits a content to car navigation device 10, and determining whether the transmission is permitted.

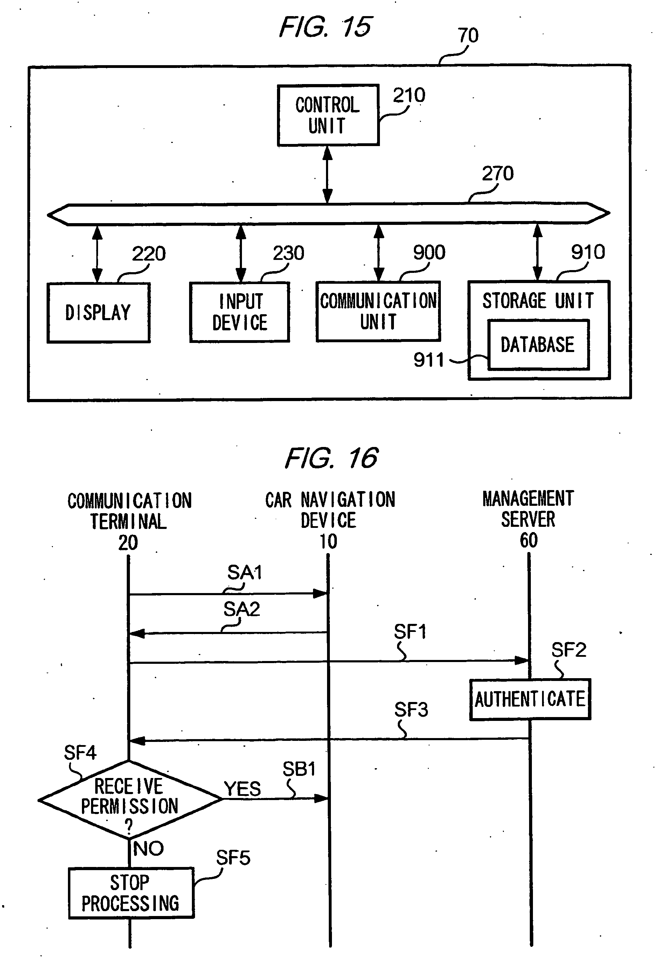

Fig. 15 shows a configuration of management server 70. As shown, management server 70 includes control unit 210, display 220, input device 230, communication unit 900, storage unit 910 and bus 270. Communication unit 900 includes a communication interface for performing communication with an electronic device via the Internet 40. Storage unit 910 stores a database 911. In database 911 (i) an identification number of communication terminal 20, which number was registered when a user of the communication terminal 20 purchased a content provided by content server 50, and (ii) a device ID of car navigation device 10 are stored correspondingly. The identification number may be a phone number of communication terminal 20, for example.

Fig. 16 shows an example of an operation of transferring a content from communication terminal 20 to car navigation device 10. In the following description, JavaAPP2, which is an execution environment of the content, should be transmitted to car navigation device 10. In addition, when downloading the content at cost or cost-free to communication terminal 20 from content server 50, communication terminal 20 should transmit to management server 70 an identification number of communication terminal 20 and a device ID of an electronic device to which the user wants to transfer the content (namely, car navigation device 10). Management server 70 should thus store the identification number and the device ID correspondingly in database 911.

First, communication terminal 20 obtains the device ID from car navigation device 10, similarly to the first embodiment (step SA1 and SA2 of Fig. 5 and Fig. 16). Next, communication terminal 20 creates a request message for authentication of car navigation device 10, in which the identification number and the device ID are included, and transmits the message to management server 70 (step SF1 of Fig. 16). Upon receipt of the request message, control unit 210 of management server 70 determines whether the identification number and the device ID are registered correspondingly in database 911 (step SF2). If the identification number and the device ID are registered, control unit 210 transmits to communication terminal 20 via communication unit 900 a permission message, notifying that transfer of the content is permitted. If the identification number and the device ID are not registered, control unit 210 transmits a prohibition message to car navigation device 10, notifying that transfer is prohibited (step SF3). Upon receipt of the permission message (step SF4, YES), control unit of communication terminal 20 starts the processing of transferring the content as described in Fig. 6 (step SB 1 of Fig. 6). If communication terminal 20 receives the prohibition message (SF4, NO), control unit 210 of communication terminal 20 stops the processing (step SF5), and thus the content is not transferred from communication terminal 20.

### <Modifications>

### (Example 1)

In the above embodiments, communication terminal 20 transmits JavaAPP2 to car navigation device 10 prior to transmission of a content. In a case where JavaAPP2 is preinstalled in a car navigation device, communication terminal 20 may transmit only the content to car navigation device 10.

### (Example 2)

In the above embodiments, permission for transferring a content is determined by comparing two content provider IDs. It is possible that a content provider may employ an additional condition for transferring a content. For example, the content provider can define the number of times of transferring a specified content.

Specifically, information including a parameter representing the number of times transfer is allowed is added to ADF of JavaAPP1. Every time the content is transferred from one device to another, "1" is subtracted from the number, and thereby the information is updated. If the number reaches zero, further transfer is prohibited.

Further, it is possible that the information is stored in content server 50. In this case, before transferring a content to car navigation device 10, communication terminal 20 accesses content server 50 to obtain permission for transfer of a content. On the other hand, content server 50 counts the number times content server 50 is accessed by communication terminal 20, to thereby obtain the number times content is transferred. If the counted number is less than a predetermined value, content server 50 gives permission to communication terminal 20. If the counted number has reached the predetermined value, content server 50 transmits to communication terminal 20 a message to notify that the content cannot be transferred.

In this way, by employing additional conditions relating to transfer of a content, a wide variety of methods of copyright management is provided for a content provider.

### (Example 3)

In the above embodiment, JavaAPP1 is utilized to transfer a content and JavaAPP2 to car navigation device 10. It is also possible that JavaAPP1 is capable of interpreting and executing the content. In this case, a content downloaded from content server 50 is available both in communication terminal 20 and car navigation device 10. Accordingly, different types of devices (mobile phone, car navigation device, and other home electric appliances, for example) can share the same content.

### (Example 4)

It is possible that JavaAPP1 and JavaAPP2 are stored in a computer readable storage medium such as a CD-ROM (Compact Disk-Read Only Memory) or FD (Floppy Disk), via which medium JavaAPP1 or JavaAPP2 is installed in an electronic device, thereby providing the same function as that of communication terminal 20 or car navigation device 10.

While the invention will be described in conjunction with the preferred embodiments, it will readily be understood that it is not intended to limit the scope of the invention to these embodiments. On the contrary, the invention is intended to cover alternatives, modifications, and equivalents, which may be included within the scope of the inventions as defined by the appended claims.

## Claims

1. A mobile communication terminal (20), ***characterized by*:**
a storage (260) adapted to store in correspondence a content and a content provider ID of the content;
a requesting means (250) adapted to send a request for a content provider ID to an electronic device;
a receiving means (250) adapted to receive from an electronic device (10) the requested content provider ID;
transfer control means (210) adapted to compare the content provider ID stored in said storage (260) with the content provider ID received by said receiving means (250), and, only if both of the content provider IDs are same, to transfer the content stored in said storage (260) to the electronic device (10).

2. The mobile communication terminal (20) of claim 1, further comprising a transmitting means (250) adapted to transmit to the electronic device (10) the content provider ID together with an application program (JavaAPP2) for executing the content.

3. The mobile communication terminal (20) of claim 2, further comprising a counting means (210) adapted to count the number of times transfer of the content is performed by said transmitting means (250);
wherein said transfer control means (210) is adapted to perform the comparison between the content provider ID stored in said storage and the received content provider ID and the transfer only if the number is equal to or smaller than a predetermined value defined by a provider of the content.

4. The mobile communication terminal (20) of claim 2, wherein:
said storage means (260) is further adapted to store a device ID for identifying an electronic device (10) to which permission for transfer of the content is given; and
said transfer control means (210) is adapted to compare a device ID received by said receiving means (250) with the device ID stored in said storage (260), and, only if both of the device IDs are the same (10), perform the comparison of the content provider IDs and the transfer.

5. The mobile communication terminal (20) of claim 2, further comprising a requesting means adapted to request a server to provide permission for transfer of the content to the electronic device (10);
wherein said transfer control means (210) is adapted to perform the comparison and the transfer only if the requesting means receives the permission.

6. The mobile communication terminal (20) of claim 2, which is a mobile phone and said electronic device (10) is a car navigation device.

7. An electronic device (10), ***characterized by***
an obtaining means (250) adapted to obtain a content provider ID and an application program (JavaAPP2) for executing a content from a communication terminal (20);
an executing means (210) adapted to execute the application program;
a request processing means (210) adapted to receive a request for a content provider ID from a communication terminal (20) and to transmit a response message comprising the content provider ID to the communication terminal (20) in response to the request;
wherein the request processing means (210) is adapted to transmit the response message only during execution of the application program; and
a receiving means (250) is adapted to receive from the communication terminal (20) the content only during execution of the application program (JavaAPP2).

8. The electronic device (10) of claim 7, which is a car navigation device.

## Patentansprüche

1. Ein mobiles Kommunikationsendgerät (20), **gekennzeichnet durch**:
einen Speicher (260), der angepasst ist, in Entsprechung einen Inhalt und einen Inhaltsanbieter-ID des Inhalts zu speichern;
ein Anforderungsmittel (250), das angepasst ist, eine Anforderung für einen Inhaltsanbieter-ID zu einer elektronischen Einrichtung zu senden;
ein Empfangsmittel (250), das angepasst ist, von einer elektronischen Einrichtung (10) den angeforderten Inhaltsanbieter-ID zu empfangen;
ein Transfersteuermittel (210), das angepasst ist, den Inhaltsanbieter-ID, der in dem Speicher (260) gespeichert ist, mit dem Inhaltsanbieter-ID, der **durch** das Empfangsmittel (250) empfangen wird, zu vergleichen, und nur, falls beide Inhaltsanbieter-ID die gleichen sind, den Inhalt, der in dem Speicher (260) gespeichert ist, zu der elektronischen Einrichtung (10) zu transferieren.

2. Das mobile Kommunikationsendgerät (20) nach Anspruch 1, ferner umfassend ein Übertragungsmittel (250), das angepasst ist, zu der elektronischen Einrichtung (10) den Inhaltsanbieter-ID zusammen mit einem Anwendungsprogramm (JavaAPP2) zum Ausführen des Inhalts zu übertragen.

3. Das mobile Kommunikationsendgerät (20) nach Anspruch 2, ferner umfassend ein Zählmittel (210), das angepasst ist, die Zahl von Malen zu speichern, die Transfer des Inhalts durch das Übertragungsmittel (250) durchgeführt wird;
wobei das Transfersteuermittel (210) angepasst ist, den Vergleich zwischen dem Inhaltsanbieter-ID, der in dem Speicher gespeichert ist, und dem empfangenen Inhaltsanbieter-ID und den Transfer durchzuführen, nur wenn die Zahl gleich oder kleiner einem vorbestimmten Wert ist, der durch einen Anbieter des Inhalts definiert ist.

4. Das mobile Kommunikationsendgerät (20) nach Anspruch 2, wobei:
das Speichermittel (260) ferner angepasst ist, einen Einrichtungs-ID zum Identifizieren einer elektronischen Einrichtung (10) zu speichern, für die Erlaubnis für einen Transfer des Inhalts gegeben ist; und
das Transfersteuermittel (210) angepasst ist, einen Einrichtungs-ID, der durch das Empfangsmittel (250) empfangen wird, mit dem Einrichtungs-ID, der in dem Speicher (260) gespeichert ist, zu vergleichen, und nur, falls beide Einrichtungs-IDs die gleichen sind (10), den Vergleich der Inhaltsanbieter-IDs und den Transfer durchzuführen.

5. Das mobile Kommunikationsendgerät (20) nach Anspruch 2, ferner umfassend ein Anforderungsmittel, das angepasst ist, einen Server aufzufordern, Erlaubnis für einen Transfer des Inhalts zu der elektronischen Einrichtung (10) vorzusehen;
wobei das Transfersteuermittel (210) angepasst ist, den Vergleich und den Transfer nur durchzuführen, falls das Anforderungsmittel die Erlaubnis empfängt.

6. Das mobile Kommunikationsendgerät (20) nach Anspruch 2, das ein Mobiltelefon ist und die elektronische Einrichtung (10) eine Autonavigationseinrichtung ist.

7. Eine elektronische Einrichtung (10), **gekennzeichnet durch**
ein Beschaffungsmittel (250), das angepasst ist, einen Inhaltsanbieter-ID und ein Anwendungsprogramm (JavaAPP2) zum Ausführen eines Inhalts von einem Kommunikationsendgerät (20) zu beschaffen;
ein Ausführungsmittel (210), das angepasst ist, das Anwendungsprogramm auszuführen;
ein Anforderungsverarbeitungsmittel (210), das angepasst ist, eine Anforderung für einen Inhaltsanbieter-ID von einem Kommunikationsendgerät (20) zu empfangen und eine Antwortnachricht, die den Inhaltsanbieter-ID umfasst, zu dem Kommunikationsendgerät (20) als Reaktion auf die Anforderung zu übertragen;
wobei das Anforderungsverarbeitungsmittel (210) angepasst ist, die Antwortnachricht nur während Ausführung des Anwendungsprogramms zu übertragen; und
ein Empfangsmittel (250) angepasst ist, von dem Kommunikationsendgerät (20) den Inhalt nur während Ausführung des Anwendungsprogramms (JavaAPP2) zu empfangen.

8. Die elektronische Einrichtung (10) nach Anspruch 7, die eine Autonavigationseinrichtung ist.

## Revendications

1. Terminal de communication mobile (20), **caractérisé par** :
une mémoire (260) propre à stocker, de manière correspondante, un contenu et une identification ID de prestataire de contenu du contenu ;
un moyen de demande (250) propre à envoyer, à un dispositif électronique, une demande d'ID de prestataire de contenu ;
un moyen de réception (250) propre à recevoir, d'un dispositif électronique (10), l'ID demandée de prestataire de contenu ;
un moyen de commande de transfert (210) propre à comparer l'ID de prestataire de contenu, stockée dans ladite mémoire (260), à l'ID de prestataire de contenu, reçue par ledit moyen de réception (250) et à transférer, au dispositif électronique (10), le contenu stocké dans ladite mémoire (260) uniquement si les deux IDs de prestataire de contenu sont les mêmes.

2. Terminal de communication mobile (20) selon la revendication 1, comprenant en outre un moyen d'émission (250) propre à transmettre au dispositif électronique (10), l'ID de prestataire de contenu en même temps qu'un programme d'application (JavaAPP2) pour exécuter le contenu.

3. Terminal de communication mobile (20) selon la revendication 2, comprenant en outre un moyen de comptage (210) propre à compter le nombre de fois que le transfert du contenu est effectué par ledit moyen d'émission (250) ;
dans lequel ledit moyen de commande de transfert (210) est propre à procéder à la comparaison entre l'ID de prestataire de contenu, stockée dans ladite mémoire, et l'ID reçue de prestataire de contenu, ainsi qu'au transfert uniquement si le nombre est égal ou inférieur à une valeur prédéterminée, définie par un prestataire du contenu.

4. Terminal de communication mobile (20) selon la revendication 2, dans lequel :
ledit moyen de mémorisation (260) est en outre propre à conserver une ID de dispositif pour identifier un dispositif électronique (10) auquel une permission est accordée pour un transfert du contenu ; et
ledit moyen de commande de transfert (210) est propre à comparer une ID de dispositif, reçue par ledit moyen de réception (250), à l'ID de dispositif stockée dans ladite mémoire (260) et à exécuter la comparaison des IDs de prestataire de contenu et le transfert, uniquement si les deux IDs de dispositif sont les mêmes (10).

5. Terminal de communication mobile (20) selon la revendication 2, comprenant en outre un moyen de demande, propre à demander à un serveur d'accorder la permission pour un transfert du contenu au dispositif électronique (10) ;
dans lequel ledit moyen de commande de transfert (210) est propre à procéder à la comparaison et au transfert, uniquement si le moyen de demande reçoit la permission.

6. Terminal de communication mobile (20) selon la revendication 2, qui est un poste téléphonique mobile, et ledit dispositif électronique (10) est un dispositif de navigation de voiture.

7. Dispositif électronique (10), **caractérisé par**
un moyen d'obtention (250) propre à obtenir une ID de prestataire de contenu et un programme d'application (JavaAPP2) pour exécuter un contenu à partir d'un terminal de communication (20) ;
un moyen d'exécution (210) propre à exécuter le programme d'application ;
un moyen de traitement de demande (210) propre à recevoir une demande pour une ID de prestataire de contenu d'un terminal de communication (20) et à émettre au terminal de communication (20), un message de réponse comprenant l'ID de prestataire de contenu, en réponse à la demande ;
dans lequel le moyen de traitement de demande (210) est propre à émettre le message de réponse uniquement pendant l'exécution du programme d'application ; et
un moyen de réception (250) est propre à recevoir, du terminal de communication (20), le contenu uniquement pendant l'exécution du programme d'application (JavaAPP2).

8. Dispositif électronique (10) selon la revendication 7, qui est un dispositif de navigation de voiture.
